# EUROPEAN PATENT SPECIFICATION

(11) **EP 3 352 483 B1**
(45) Date of publication and mention of the grant of the patent: **24.11.2021**
(21) Application number: 16845857.8
(22) Date of filing: 21.06.2016
(51) Int. Cl.: H04W 4/02, H04W 72/04, H04W 88/08, H04W 92/10, H04W 4/44, H04W 4/06, H04W 72/00, H04W 48/12

(54) **BASE STATION, WIRELESS TERMINAL, METHODS AND PROGRAM PRODUCT FOR TARGETED V2X COMMUNICATION**
BASISSTATION, DRAHTLOSES TERMINAL, METHODEN UND PROGRAMMPRODUKT FÜR DIE GEZIELTE V2X-KOMMUNIKATION
STATION DE BASE, TERMINAL SANS FIL, MÉTHODES ET PRODUIT PROGRAMME POUR UNE COMMUNICATION V2X CIBLÉE

(30) Priority: 18.09.2015 JP 2015185292
(43) Date of publication of application: 25.07.2018
(73) Proprietor: NEC Corporation, Tokyo 108-8001 (JP)
(72) Inventor: FUTAKI, Hisashi, Tokyo 108-8001 (JP)
(74) Representative: MacDougall, Alan John Shaw
(86) International application number: PCT/JP2016/002978
(87) International publication number: WO 2017/046977

(56) References cited:
- WO-A1-2014/051473
- WO-A1-2014/198325
- JP-A- 2002 281 030
- US-A1- 2010 112 978
- US-A1- 2014 051 346
- US-A1- 2014 302 774
- 'III, Discussion of V2P scenario' 3GPP TSG-RAN WG1 MEETING #82 RL-154780, [Online] 30 August 2015, pages 1 - 3, XP051021048 Retrieved from the Internet: <URL:http://www.3gpp.org/ ftp/tsg_ran/WG1_RL1/TSGR1_82/Docs/R1-154780 > [retrieved on 2016-08-31]
- ZTE: 'SOME CONSIDERATIONS ON MULTI-CELL MULTICAST/BROADCAST FOR V2X' 3GPP TSG-RAN WG2 MEETING #91BIS R2-154701 26 September 2015, pages 1 - 5, XP051023949 Retrieved from the Internet: <URL:HTTP://WWW.3GPP.ORG/FTP/TSG_RAN/WG2_RL 2/TSGR2_91BIS/DOCS/> [retrieved on 2016-08-31]

## Description

### Technical Field

The present disclosure relates to a radio communication system and, in particular, to broadcast/multicast transmission from a radio station to a plurality of radio terminals.

### Background Art

Non-Patent Literature 1 discloses use cases and potential requirements regarding Long Term Evolution (LTE) based Vehicle-to-Everything (V2X) services. The V2X means vehicular communications and includes Vehicle-to-Vehicle (V2V) communications, Vehicle-to-Infrastructure (V2I) communications, and Vehicle-to-Pedestrian (V2P) communications. The V2V communications or the V2V Services are communication or services between User Equipments (UEs) that are installed in vehicles and use V2V applications. The V2I communications or the V2I Services are communications or services between a UE and a Road Side Unit (RSU), both of which use V2I applications. The V2I communication includes Infrastructures-to-Vehicle (I2V) communications, unless otherwise specified. Further, the term "UE" as used herein includes not only a UE installed in a vehicle but also a UE carried by a pedestrian. The RSU is an entity located on a road side and supports V2I Services including transmission and reception to and from vehicle UEs that use V2I applications. The RSU is installed in a base station, such as a LTE base station (i.e., Evolved Node B (eNB)), or in a stationary UE. The V2P communications or the V2P Services are communications or services between a vehicle UE and a pedestrian UE, both of which use the V2I application. The V2P communications may be performed via an RSU and is, accordingly, referred to as V2I2P communications or P2I2V communications.

Some use cases regarding the V2I Service disclosed in Non-Patent Literature 1 will be introduced here. Non-Patent Literature 1 discloses, in Section 5.6 V2I Emergency Stop Use Case, a configuration in which a vehicle and an RSU are each equipped with a Prose-enabled UEs and the vehicle and the RSU perform Proximity-based services (Prose) communication. ProSe communication is device-to-device (D2D) communication and includes direct communication between two or more ProSe-enabled UEs that are in proximity to each other. In this use case, a vehicle A transmits a message indicating an event, such as an emergency stop, to a service RSU. The service RSU receives this message from the vehicle A and then relays this message to its surrounding vehicles. All vehicles within the transmission range from the service RSU are able to receive this message.

In the use case disclosed in Section 5.7 "Queue Warning" of Non-Patent Literature 1, each of vehicles (e.g., vehicles A, B, and C) broadcasts a message periodically to other vehicles in proximity using V2V Service. The vehicle C receives the broadcast V2V messages, determines that it is the end of the queue, and thus periodically informs the RSU of the queue information using V2I Service. The queue information includes, for example, the size of the queue and the last position of the queue. The RSU broadcasts a message regarding the queue to vehicles in proximity, using V2I Service, based on the information received from the vehicle C.

In the use case disclosed in Section 5.8 "Road safety services" of Non-Patent Literature 1, an eNB is installed on a road side, and a V2I message is delivered from one UE supporting V2I Service to other UEs supporting V2I Service via this eNB. A UE in a vehicle A transmits a V2I message periodically or in response to an occurrence of a certain event. The eNB receives this V2I message from the UE in the vehicle A, and distributes the received V2I message to UEs within a local area. A UE in a vehicle B monitors transmission by the eNB of the V2I message, and receives the V2I message at the cell of the eNB. The message broadcast by the eNB may be the same as, or different from, the message received from the vehicle.

In the use case disclosed in Section 5.14 "V2X Road safety service via infrastructure" of Non-Patent Literature 1, an RSU C detects that an accident has occurred in the area where the RSU C manages. The RSU C indicates the occurrence of this accident to a remote server (e.g., a Traffic Safety Server (TSS) or an Intelligent Transport Systems (ITS) server) and starts transmission of this information in the area. The server informs other RSUs near the RSU C that there is an accident in the area managed by the RSU C. The other RSUs start transmission of V2X messages indicating that there is an accident in the area indicated by the RSU C. Further, upon detecting that a pedestrian is approaching, the RSU C transmits to nearby vehicles a V2I message indicating that there is a pedestrian. Since the approach of the pedestrian is local and transient information, the RSU C does not transmit this information to the server.

### Citation List

### Patent Literature

[Patent Literature 1] US 2010/0112978 A1 discloses a method for transmitting and receiving broadcasting service information and a mobile station for a broadcasting service.
[Patent Literature 2] WO 2014/198325 A1 discloses a method, a node, an entity and a computer program for controlling vehicle-to-vehicle communication is described. The vehicle-to-vehicle communication is performable using a first radio technology for performing the vehicle-to-vehicle communication and a second radio technology for accessing a cellular network.

### Non-Patent Literature

[Non-Patent Literature 1] 3GPP S1-151330 "3GPP TR 22.885 V0.2.0 Study on LTE Support for V2X Services (Release 14)", April 2015
[Non-Patent Literature 2] 3GPP TSG RAN WG2 #91bis R2-154701 "Some considerations on multi-cell multicast/broadcast for V2X", October 2015. This discloses analysis of the SA's requirements for V2X broadcast and discussion of the characteristics of V2X traffic for broadcast.

### Summary of Invention

### Technical Problem

As described above, in some use cases disclosed in Non-Patent Literature 1, an RSU or an eNB receives a message from a UE installed in a vehicle, and broadcasts this message, or a message generated based on this message, to nearby vehicles (i.e., UEs) without transmitting this message to a server (i.e., a TSS or an ITS server). Non-Patent Literature 1, however, only discloses these use cases and requirements therefor, but it does not disclose how these use cases are specifically achieved.

One of the objects to be attained by embodiments disclosed herein is to provide an apparatus, a method, and a program that contribute to achievement of a configuration that enables an RSU or a base station (e.g., eNB) to broadcast a message received from one radio terminal (e.g., UE) to a plurality of other radio terminals. It should be noted that this object is merely one of the objects to be attained by the embodiments disclosed herein. Other objects or problems and novel features will be made apparent from the descriptions in the specification and the accompanying drawings.

### Solution to Problem

The invention is defined by the independent claims. Further embodiments of the invention are defined by the dependent claims.

In a first aspect, a base station used in a cellular communication network includes at least one wireless transceiver and at least one processor. The at least one processor is configured to transmit configuration information regarding a specific signal that is used for a V2X Service, to a first radio terminal. The at least one processor is further configured to, in response to receiving from the first radio terminal, via the at least one wireless transceiver the specific signal containing a first message, transmit a second message derived from the first message, via the at least one wireless transceiver using a broadcast/multicast signal to be received by a specific radio terminal group identified by an identifier of a V2X service area for vehicle related communications, wherein V2X service area is allocated a dedicated carrier frequency band secured for said V2X Service and said V2X service area is defined independently from any cell used in the cellular communication network by allowing said V2X service area to at least partially cover a plurality of cells or by having one or more other V2X service areas in the cell served by the base station.

In a second aspect, a method in a base station used in a cellular communication network includes: (a) transmitting configuration information regarding a specific signal that is used for a V2X Service to a first radio terminal; and (b) in response to receiving from the first radio terminal the specific signal containing a first message, transmitting a second message derived from the first message, using a broadcast/multicast signal to be received by a specific radio terminal group identified by an identifier of a V2X service aera for vehicle related communications, wherein the V2X service area is allocated a dedicated carrier frequency band secured for said V2X Service and said V2X service area is defined independently from any cell used in the cellular communication network by allowing said V2X service area to at least partially cover a plurality of cells or by having one or more other V2X service areas in the cell served by the base station.

In a third aspect, a radio terminal includes at least one wireless transceiver and at least one processor. The at least one processor is configured to receive configuration information regarding a specific signal that is used for a V2X Service, from a base station and to, in response to occurrence of a certain event, transmit the specific signal containing a first message in accordance with the configuration information. The at least one processor is further configured to receive, from the base station or another base station, a broadcast/multicast signal to be received by a specific radio terminal group identified by an identifier of a V2X service area for vehicle related communications, the broadcast/multicast signal containing a second message derived from the first message, wherein the V2X service area is allocated a dedicated carrier frequency band secured for said V2X Service and said V2X service area is defined independently fromany cell used in the cellular communication network by allowing said V2X service area to at least partially cover a plurality of cells or by having one or more other V2X service areas in the cell served by the base station.

In a fourth aspect, a method in a radio terminal includes: (a) receiving configuration information regarding a specific signal that is used for a V2X Service, from a base station; (b) in response to occurrence of a certain event, transmitting the specific signal containing a first message in accordance with the configuration information; and (c) receiving, from the base station or another base station, a broadcast/multicast signal to be received by a specific radio terminal group identified by an identifier of a V2X service area for vehicle related communications, the broadcast/multicast signal containing a second message derived from the first message, wherein the V2X service area is allocated a dedicated carrier frequency band secured for said V2X Service and said V2X service area is defined independently from any cell used in the cellular communication network by allowing said V2X service area to at least partially cover a plurality of cells or by having one or more other V2X service areas in the cell served by the base station.

In a fifth aspect, a program includes instructions (software codes) that, when loaded into a computer, cause the computer to perform the method according to the above-described second or fourth aspect.

### Advantageous Effects of Invention

According to the above-described aspects, it is possible to provide an apparatus, a method, and a program that contribute to achievement of a configuration that enables an RSU or a base station (e.g., eNB) to broadcast a message received from one radio terminal (e.g., UE) to a plurality of other radio terminals.

### Brief Description of Drawings

Fig. 1 is a diagram showing a configuration example of a radio communication system according to an embodiment;
Fig. 2 is a sequence diagram showing one example of operations of a base station and a radio terminal according to an embodiment;
Fig. 3 is a block diagram showing a configuration example of a base station according to an embodiment; and
Fig. 4 is a block diagram showing a configuration example of a radio terminal according to an embodiment.

### Description of Embodiments

Specific embodiments are described hereinafter in detail with reference to the drawings. The same or corresponding elements are denoted by the same reference signs throughout the drawings, and repetitive descriptions will be omitted as necessary for clarity of explanation.

The following descriptions on the embodiments mainly focus on an Evolved Packet System (EPS) that contains LTE and System Architecture Evolution (SAE). However, these embodiments are not limited to being applied to the EPS and may be applied to other mobile communication networks or systems such as 3GPP UMTS, 3GPP2 CDMA2000 system (1xRTT, High Rate Packet Data (HRPD)), global system for mobile communications (GSM (trademark))/General packet radio service (GPRS) system, and WiMAX system.

### First Embodiment

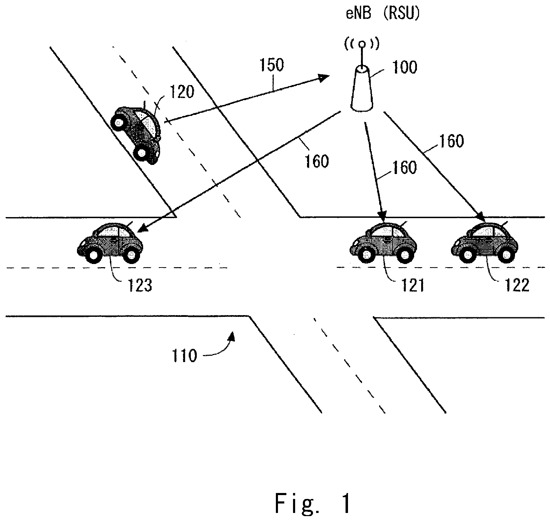

Fig. 1 shows a configuration example of a radio communication system according to this embodiment. A base station (eNB) 100 is installed on a road side. In the example shown in Fig. 1, the eNB 100 is installed near an intersection 110. The eNB 100 supports a V2I Service. In other words, the eNB 100 has an RSU that executes a V2I application to support the V2I Service. Radio terminals (i.e., UEs) 120-123 are installed in vehicles. Each of the UEs 120-123 may be implemented in an in-vehicle processing unit (e.g., a car navigation system). The UEs 120-123 each execute a V2I application to support the V2I Service. The UEs 120-123 may support another V2X Service, i.e., a V2V Service or a V2P Service or both.

Communications between the eNB 100 having the RSU and the UEs 120-123 may use a dedicated carrier frequency band f1 secured for the V2X Service. Alternatively, these communications may use a shared frequency band (or a shared spectrum) f2 that is not licensed to any operator or is shared by a plurality of operators. Such a communication using a shared frequency is referred to as Licensed Shared Access (LSA). Alternatively, these communications may use a carrier frequency band f3 that is licensed to an operator of a cellular communication network. Further, communications between the UEs (not shown) may use any one of the above-described frequency bands f1, f2, and f3.

As already described above, Proximity-based services (ProSe) defined in 3GPP Release 12 are one example of D2D communication. The D2D communication includes at least one of Direct Communication and Direct Discovery. In 3GPP Release 12, an inter-UE radio link used for Direct Communication or Direct Discovery is referred to as a PC5 interface or Sidelink. Accordingly, it can be said that ProSe is a general term for communications (or services) that use at least the Sidelink. In the example shown in Fig. 1, the communication between two or more UEs may use the Sidelink. In 3GPP Release 12, sidelink transmission uses the same frame structure as uplink and downlink transmission of the Long Term Evolution (LTE), and uses a subset of uplink resources in frequency and time domains. In 3GPP Release 12, a UE performs sidelink transmission by using Single-Carrier Frequency-Division Multiple Access (SC-FDMA), which is similar to the scheme used in uplink transmission.

Each of the UEs 120-123 may receive a V2X configuration from a network (e.g., eNB 100 or a V2X controller (not shown)). The V2X configuration may indicate measurement configuration for a carrier frequency band that is used for the V2X Service. Additionally or alternatively, the V2X configuration may include a radio resource configuration for the V2X Service. Additionally or alternatively, the V2X configuration may indicate a radio resource pool to be used in autonomous resource selection performed by the UEs 120-123 for the V2X Service. The V2X configuration may indicate allocation of dedicated radio resources to the UEs 120-123 for the V2X Service.

A V2X Service Area (SA) may be defined to specify an area where the same V2X configuration is applied. The V2X SA may be defined in any one of: a dedicated carrier frequency band f1 secured for the V2X Service; a shared frequency band f2 for LSA; and a carrier frequency band f3 licensed to an operator of a cellular communication network. For example, a cell may be defined on the frequency band f3, and meanwhile the V2X SA may be defined on the frequency band f1 or f2. The V2X SA may be defined independently from a cell(s) or may be defined in association with a cell(s). In the former case, there may be a plurality of V2X SAs in one cell or there may be a V2X SA across a plurality of cells (i.e., a V2X SA that at least partially covers each of the plurality of cells). In the latter case, one V2X SA may be defined by one cell or by a combination of cells. Further, when a UE moves between cells belonging to the same V2X SA (i.e., the UE performs a cell re-selection or handover between the cells), the UE may continue the V2X Service without suspending this service. Alternatively, the UE may suspend the V2X service while performing the cell re-selection or handover and then resume this service after completion of the cell re-selection or handover. That is, it can be considered that the V2X SA is a "valid area" of the V2X configuration. Information about the V2X SA (e.g., V2X SA Index (ID)) may be transmitted as one of information elements (IEs) contained in the V2X configuration or may be transmitted by a message or signalling other than the V2X configuration. For example, the eNB 100 may incorporate the information about the V2X SA into the V2X configuration and then transmit the V2X configuration on the frequency band f3.

The eNB 100 is further configured to transmit, to the UE 120, configuration information regarding a specific signal 150 that is transmitted from the UE 120 to the eNB 100. The eNB 100 is still further configured to transmit, in response to reception of the specific signal 150 from the UE 120, a first V2I message that has been carried by the specific signal 150, or a second V2I message derived from the first V2I message, using a broadcast/multicast signal 160 to be received by a plurality of UEs (e.g., UEs 121-123). This allows the eNB 100 to perform one-to-many delivery of a message from one UE to other UEs.

The eNB 100 may transmit the first V2I message received from the UE 120 transparently to a plurality of UEs. Alternatively, the eNB 100 may generate the second V2I message based on the first V2I message received from the UE 120 and then transmit the generated second V2I message to a plurality of UEs. For example, the first and second V2I messages may be, but not limited to, a message regarding an emergency stop or an accident regarding a vehicle equipped with the UE 120, a message regarding a driving status of the vehicle, or a message regarding conditions of nearby roads (e.g., a traffic jam, weather, an accident, or an obstacle on the road).

In some implementations, the UE 120, which is the transmission source of the specific signal 150 carrying the first V2I message, may also receive from the eNB 100 the broadcast/multicast signal 160 carrying the first or second V2I message.

Since the vehicle equipped with the UE 123 has already passed through the intersection 110, the driver of the vehicle equipped with the UE 123 may not need the information contained in the first or second V2I message (e.g., information regarding an emergency stop or an accident regarding the vehicle equipped with the UE 120 near the intersection 110). Accordingly, in some implementations, the UE 123 may be configured to stop receiving the broadcast/multicast signal 160 from the eNB 100 when the UE 123 has already passed through the intersection 110. Alternatively, the UE 123 may be configured to suppress output of a display or announcement to notify the driver of the content of the first or second V2I message received from the eNB 100 when the UE 123 has already passed through the intersection 110.

In some implementations, the specific signal 150 may be a unicast signal and transmitted on a unicast bearer. The unicast bearer may be referred to as a Point-to-Point (PTP) bearer. The unicast bearer used for the transmission of the specific signal 150 may be a Signalling Radio Bearer (SRB) or a Data Radio Bearer (DRB). The unicast bearer (e.g., SRB or DRB) used for the transmission of the specific signal 150 may be a new type of a radio bearer defined for the V2I Service, such as a new SRB (e.g., SRB 3, V2X SRB (V-SRB)) or a new DRB (e.g., V2X DRB (VRB or V-DRB)). Further, the unicast bearer used for the transmission of the specific signal 150 may be mapped onto a new logical channel (LCH) (e.g., V2X Broadcast Control Channel (V-BCCH), or V2X Traffic Channel (VTCH)). Further, the unicast bearer used for the transmission of the specific signal 150 may be mapped onto a new transport channel (TrCH) (e.g., V2X Broadcast Channel (V-BCH), V2X Shared Channel (V-SCH), or V2X Discovery Channel (V-DCH)). A certain Logical Channel ID (LCID) or Logical Channel Group (LCG) ID may be assigned to the DRB used for the transmission of the specific signal 150. The PTP radio bearer used for the transmission of the specific signal 150 may not be mapped to any network bearer (e.g., S1 bearer or E-UTRAN Radio Access Bearer (E-RAB)). Alternatively, the network bearer mapped to the PTP radio bearer used for the transmission of the specific signal 150 may be terminated at the eNB (RSU) 100.

In some implementations, the specific signal 150 may be a broadcast signal. This broadcast signal may be a signal that is used for communication directly between UEs (i.e., without communicating through the network). The broadcast signal may be a signal similar to the one used for LTE D2D communication (e.g. ProSe), or it may be a signal newly defined for the V2I application or the V2I Service. The UE 120 may transmit the specific signal 150 using a Logical Channel ID (LCID) or Logical Channel Group (LCG) ID that has been assigned in advance.

In some implementations, the configuration information regarding the transmission by the UE 120 of the specific signal 150 may be sent from the eNB 100 to the UE 120 by using an RRC Connection Setup message or an RRC Connection Reconfiguration message. Alternatively, this configuration information may be transmitted by system information (i.e., SIB) to be received by UEs supporting the V2X application or the V2X Service.

The broadcast/multicast signal 160 is transmitted by the eNB 100 in such a way that a plurality of UEs can receive this broadcast/multicast signal 160. The broadcast/multicast signal 160 may be broadcast from the eNB 100 to all the radio terminals within a cell served by the eNB 100. Alternatively, the broadcast/multicast signal 160 may be multicast from the eNB 100 to a specific UE group (i.e., a specific set of UEs) within a cell served by the eNB 100. The multicast is also referred to as a groupcast. In the groupcast, a UE that does not belong to the specific group discards the broadcast/multicast signal 160 received from the eNB 100 (or a packet or a message carried by this signal). For example, a receiver side (e.g., UE) determines whether information should be received by performing certain filtering processing, and restores this information if this information should be received. In the certain filtering processing, for example, a UE may restore a group identifier contained in the layer-2 header and determine whether this group identifier should be received. That is, the term "multicast" used in this specification includes "groupcast" and the broadcast/multicast signal 160 used in this specification includes a groupcast signal. The group identifier may be configured in the receiver side (e.g., UE) in advance or may be sent from a transmission side (e.g., eNB or application server). The group identifier may be information indicating a specific group (e.g., UEs) or may be a V2X SA Index (ID).

In some implementations, the broadcast/multicast signal 160 may be transmitted on a broadcast bearer, a multicast bearer, or a Point-to-Multipoint (PTM) bearer. Specifically, the broadcast/multicast signal 160 may be transmitted on a data radio bearer for carrying Multimedia Broadcast/Multicast Service (MBMS) data, i.e., an MBMS Radio Bearer (MRB) or a Point-to-Multipoint (PTM) Radio Bearer. In MBMS, the same data (or message) is transmitted to a plurality of UEs via a common MRB (or PTM radio bearer). Transmission schemes for MBMS include a Multicast Broadcast Single Frequency Network (MBSFN) and a Single Cell Point to Multi-point (SC-PTM). In the MBSFN scheme, the MRB (or PTM bearer) used for transmission of the broadcast/multicast signal 160 may be transmitted using a Multicast Channel (MCH) and a Physical Multicast Channel (PMCH). On the other hand, in SC-PTM, the MRB (or PTM bearer) used for transmission of the broadcast/multicast signal 160 may be transmitted using a Downlink Shared Channel (DL-SCH) and a Physical Downlink Shared Channel (PDSCH).

In some implementations, a specific Temporary Mobile Group Identity (TMGI) may be assigned to the transmission of the broadcast/multicast signal 160. The eNB 100 may transmit information regarding this TMGI to the UE 120. The information regarding the TMGI may include a PLMN Identity. This PLMN Identity may specify one of values (e.g. V2X-PLMN IDs) that have been assigned in advance to the V2X Service (e.g., V2I). Alternatively, a specific Service Area Identity (SAI) may be assigned to the transmission of the broadcast/multicast signal 160. In this case, the UE may acquire a User Service Description (USD) for a higher layer (e.g., Application layer) in advance. This USD includes the corresponding information (i.e., a specific TMGI or SAI used for the transmission of the broadcast/multicast signal 160).

Alternatively, in some implementations, the broadcast/multicast signal 160 may be a Broadcast Control Channel (BCCH) that carries a System Information Block (SIB). In this case, the first or second V2I message may be contained in the SIB.

In some implementations, the eNB 100 may associate the specific signal (i.e., specific uplink signal) 150 with the specific broadcast/multicast signal (downlink signal) 160 in advance. This allows the eNB 100 to promptly broadcast to the other UEs 121-123 a first V2I message received from the UE 120 on the specific signal 150 (or a second V2I message derived from the first V2I message). For example, the eNB 100 may associate a PTP radio bearer (or a network bearer) for the specific signal 150 with a PTM radio bearer for the broadcast/multicast signal 160.

The frequency on which the UE 120 transmits the specific signal 150 may be the same as, or different from, the carrier frequency band on which the eNB 100 transmits the broadcast/multicast signal 160 that corresponds to the specific signal 150. For example, the frequency used for the transmission of the specific signal 150 may be a frequency f3 (e.g., LTE operator specific carrier) licensed to an LTE operator or a shared frequency f2 (e.g., Licensed Shared Access (LSA) carrier). Meanwhile, the frequency used for the transmission of the broadcast/multicast signal 160 may be the shared frequency f2 (e.g., LSA carrier) or a frequency f1 (e.g., V2X dedicated carrier) dedicated for the V2X Service (e.g., V2I Service).

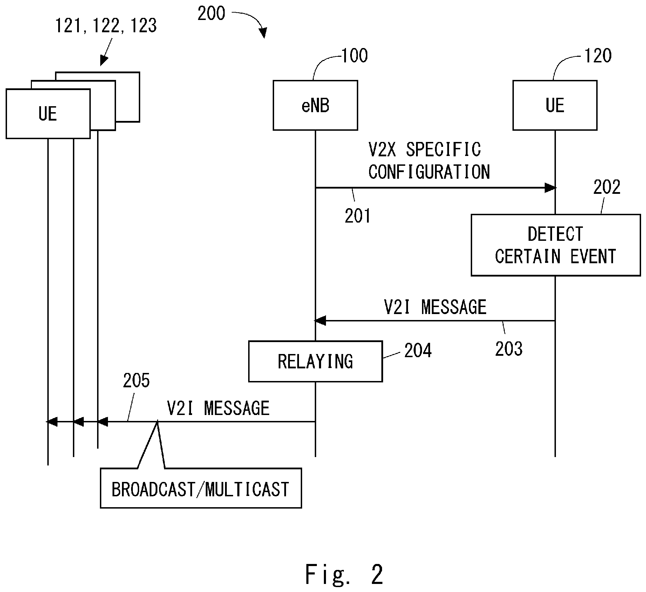

Fig. 2 is a sequence diagram showing an example of operations of the eNB 100 and the UEs 120-123. In Step 201, the eNB 100 transmits V2X-specific configuration information to the UE 120. This configuration information includes configuration of radio resources (e.g., bearer or bearer resources) used by the UE 120 to transmit the specific signal 150 to the eNB 100. In Step 202, the UE 120 detects occurrence of a certain event (e.g., an emergency stop). The occurrence of the certain event triggers the UE 120 to transmit a V2I message. Accordingly, in Step 203, the UE 120 transmits a first V2I message to the eNB 100 using the specific signal 150. In Step 204, in response to receiving the specific signal 150 from the UE 120, the eNB 100 forwards the received first V2I message carried by this signal 150, or a second V2I message derived from the first V2I message, to a plurality of UEs (Step 204). Specifically, the eNB 100 uses the broadcast/multicast signal 160 associated with the specific signal 150 to transmit the first or second V2I message (Step 205). The UEs 121-123 each receive the broadcast/multicast signal 160 and receive the first or second V2I message carried by the broadcast/multicast signal 160. The destination of the first V2I message transmitted by the UE 120 on the specific signal 150 may be an eNB different from the eNB 100 that has transmitted the V2X-specific configuration information to the UE 120.

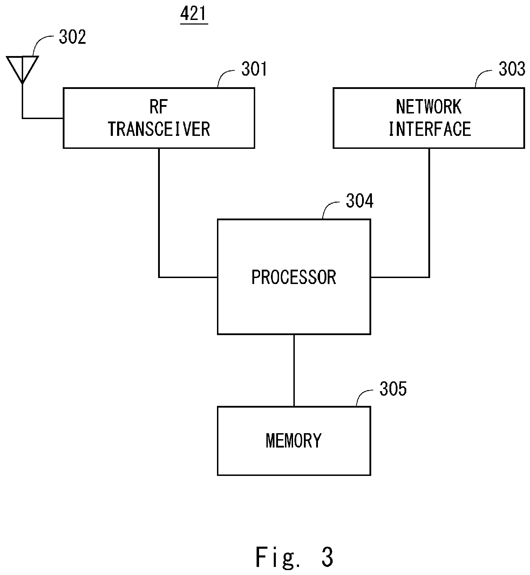

The following provides configuration examples of the eNB 100 and the UEs 120-123. Fig. 3 is a block diagram showing a configuration example of the eNB 100. Referring to Fig. 3, the eNB 100 includes an RF transceiver 301, a network interface 303, a processor 304, and a memory 305. The RF transceiver 301 performs analog RF signal processing to communicate with UEs. The RF transceiver 301 may include a plurality of transceivers. The RF transceiver 301 is coupled to an antenna 302 and the processor 304. The RF transceiver 301 receives modulated symbol data (or OFDM symbol data) from the processor 304, generates a transmission RF signal, and supplies the transmission RF signal to the antenna 302. Further, the RF transceiver 301 generates a baseband reception signal based on a reception RF signal received by the antenna 302 and supplies the baseband reception signal to the processor 304.

The network interface 303 is used to communicate with the network node (e.g., other eNBs, Mobility Management Entity (MME), Serving Gateway (S-GW), and TSS or ITS server). The network interface 303 may include, for example, a network interface card (NIC) conforming to the IEEE 802.3 series.

The processor 304 performs data plane processing including digital baseband signal processing and control plane processing for radio communication. In the case of LTE and LTE-Advanced, for example, the digital baseband signal processing performed by the processor 304 may include signal processing of a PDCP layer, an RLC layer, a MAC layer, and a PHY layer. Further, the signal processing performed by the processor 304 may include signal processing of a GTP-U UDP/IP layer for X2-U and S1-U interfaces. Further, the control plane processing performed by the processor 304 may include processing of an X2AP protocol, an S1-MME protocol, and an RRC protocol.

The processor 304 may include a plurality of processors. The processor 304 may include, for example, a modem processor (e.g., a DSP) that performs the digital baseband signal processing, a processor (e.g., a DSP) that performs signal processing of the GTP-U-U·DP/IP layer for the X2-U and S1-U interfaces, and a protocol stack processor (e.g., a CPU or an MPU) that performs the control plane processing.

The memory 305 is composed of a combination of a volatile memory and a non-volatile memory. The memory 305 may include a plurality of memory devices that are physically independent from each other. The volatile memory is, for example, a Static Random Access Memory (SRAM), a Dynamic RAM (DRAM), or a combination thereof. The non-volatile memory is a mask Read Only Memory (MROM), an Electrically Erasable Programmable ROM (EEPROM), a flash memory, a hard disc drive, or any combination thereof. The memory 305 may include a storage that is located away from the processor 304. In this case, the processor 304 may access the memory 305 via the network interface 303 or an I/O interface (not shown).

The memory 305 may store software modules (computer programs) including instructions and data to perform the processing by the eNB 100 described in the above embodiments. In some implementations, the processor 304 may be configured to load the software modules from the memory 305 and execute the loaded software modules, thereby performing processing of the eNB 100 described in the above embodiments.

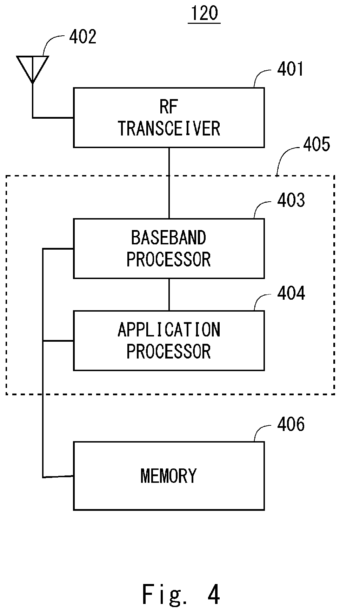

Fig. 4 is a block diagram showing a configuration example of the UE 120. The other UEs 121-123 may have configurations similar to the configuration shown in Fig. 4. A Radio Frequency (RF) transceiver 401 performs analog RF signal processing to communicate with the eNB 100. The analog RF signal processing performed by the RF transceiver 401 includes frequency up-conversion, frequency downconversion, and amplification. The RF transceiver 401 is coupled to an antenna 402 and a baseband processor 403. That is, the RF transceiver 401 receives modulated symbol data (or OFDM symbol data) from the baseband processor 403, generates a transmission RF signal, and supplies the transmission RF signal to the antenna 402. Further, the RF transceiver 401 generates a baseband reception signal based on a reception RF signal received by the antenna 402, and supplies the baseband reception signal to the baseband processor 403.

The baseband processor 403 performs digital baseband signal processing (i.e., data plane processing) and control plane processing for radio communication. The digital baseband signal processing includes (a) data compression/decompression, (b) data segmentation/concatenation, (c) composition/decomposition of a transmission format (i.e., transmission frame), (d) channel coding/decoding, (e) modulation (i.e., symbol mapping)/demodulation, and (f) generation of OFDM symbol data (i.e., baseband OFDM signal) by Inverse Fast Fourier Transform (IFFT). On the other hand, the control plane processing includes communication management of layer 1 (e.g., transmission power control), layer 2 (e.g., radio resource management and hybrid automatic repeat request (HARQ) processing), and layer 3 (e.g., signalling regarding attach, mobility, and call management).

In the case of LTE and LTE-Advanced, for example, the digital baseband signal processing performed by the baseband processor 403 may include signal processing of a Packet Data Convergence Protocol (PDCP) layer, a Radio Link Control (RLC) layer, the MAC layer, and the PHY layer. Further, the control plane processing performed by the baseband processor 403 may include processing of a Non-Access Stratum (NAS) protocol, an RRC protocol, and MAC CEs.

The baseband processor 403 may include a modem processor (e.g., a Digital Signal Processor (DSP)) that performs the digital baseband signal processing and a protocol stack processor (e.g., a Central Processing Unit (CPU) or a Micro Processing Unit (MPU)) that performs the control plane processing. In this case, the protocol stack processor, which performs the control plane processing, may be integrated with an application processor 404 described in the following.

The application processor 404 is also referred to as a CPU, an MPU, a microprocessor, or a processor core. The application processor 404 may include a plurality of processors (processor cores). The application processor 404 loads a system software program (Operating System (OS)) and various application programs (e.g., a voice call application, a WEB browser, a mailer, a camera operation application, and a music player application) from a memory 406 or from another memory (not shown) and executes these programs, thereby providing various functions of the UE 120.

In some implementations, as represented by a dashed line (405) in Fig. 4, the baseband processor 403 and the application processor 404 may be integrated on a single chip. In other words, the baseband processor 403 and the application processor 404 may be implemented in a single System on Chip (SoC) device 405. An SoC device may be referred to as a system Large Scale Integration (LSI) or a chipset.

The memory 406 is a volatile memory, a non-volatile memory, or a combination thereof. The memory 406 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only memory (MROM), an Electrically Erasable Programmable ROM (EEPROM), a flash memory, a hard disc drive, or any combination thereof. The memory 406 may include, for example, an external memory device that can be accessed from the baseband processor 403, the application processor 404, and the SoC 405. The memory 406 may include an internal memory device that is integrated in the baseband processor 403, the application processor 404, or the SoC 405. Further, the memory 406 may include a memory in a Universal Integrated Circuit Card (UICC).

The memory 406 may store software modules (computer programs) including instructions and data to perform processing by the UE 120 described in the above embodiments. In some implementations, the baseband processor 403 or the application processor 404 may load the software modules and execute the loaded software modules from the memory 406, thereby performing the processing of the UE 120 described in the above embodiments.

As described above with reference to Figs. 3 and 4, each of the processors included in the eNB 100 and the UEs 120-123 according to the above-described embodiments executes one or more programs including instructions to cause a computer to perform an algorithm described with reference to the drawings. The program(s) can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). The program(s) may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

### Other Embodiments

The descriptions of the above embodiments mainly focus on LTE/LTE-Advanced and extensions thereof. Alternatively, the above-described embodiments may be applied to other radio communication networks or systems. The eNB 100 in the above-described embodiments may be referred to as a radio station. The eNB 100 may be a radio base station used in a cellular communication network other than LTE/LTE-Advanced. The eNB 100 may be, for example, a Road Side Unit (RSU) that communicates with a plurality of vehicle mounted terminals by Dedicated Short Range Communications (DSRC).

The eNB 100 in the above embodiments may forward the first V2I message, which has been received from the UE 120 via the specific signal 150, or forward the second V2I message, which is derived from the first V2I message, to one or a plurality of nearby eNBs (or RSUs). The one or plurality of eNBs (or RSUs) may receive the first or second V2I message and broadcast the received message to a plurality of UEs.

The UE 120 in the above embodiments may transmit a V2V message, which is received from another vehicle (UE) via V2V communication, or a message derived from the V2V message, on the specific signal 150 as the first V2I message.

The eNB 100 in the above embodiments may be coupled to a server (e.g., a TSS or an ITS server) co-located in the same site together with the eNB 100. Such a server is referred to as a Mobile Edge Computing (MEC) server. In this case, the eNB 100 may transmit to an MEC server (or a TSS or ITS server) the first V2I message received in the specific signal 150 from the UE 120. Further, the eNB 100 may transmit, on the broadcast/multicast signal 160, a message received from the MEC server. In other words, the eNB 100 may map/associate a message received from the MEC server onto/with the broadcast/multicast signal 160.

The above-described embodiments may be used for applications other than the V2X Service (including the V2I Service). That is, the above-described embodiments may be used to allow the eNB 100 to perform one-to-many delivery of any message from one UE to other UEs.

Further, the embodiments described above are merely examples of applications of the technical ideas obtained by the present inventors. Needless to say, these technical ideas are not limited to the above-described embodiments and various modifications can be made thereto.

This application is based upon and claims the benefit of priority from Japanese Patent Application No. 2015-185292, filed on September 18, 2015.

### Reference Signs List

- 100: eNB
- 120-123: UEs
- 150: SPECIFIC SIGNAL
- 160: BROADCAST/MULTICAST SIGNAL
- 301: RF TRANSCEIVER
- 304: PROCESSOR
- 305: MEMORY

## Claims

1. A base station (100) used in a cellular communication network, the base station (100) comprising:
at least one wireless transceiver (301); and
at least one processor (304) configured to:
transmit (201) configuration information regarding a specific signal (150) that is used for a V2X Service, to a first radio terminal (120); and
in response to receiving (203) from the first radio terminal (120), via the at least one wireless transceiver (301), the specific signal (150) containing a first message, transmit (203) a second message derived from the first message, via the at least one wireless transceiver (301) using a broadcast/multicast signal (160) to be received by a specific radio terminal group identified by an identifier of a V2X service area for vehicle related communications, wherein
the V2X service area is allocated a dedicated carrier frequency band secured for said V2X Service and said V2X service area is defined independently from any cell used in the cellular communication network by allowing said V2X service area to at least partially cover a plurality of cells or by having one or more other V2X service areas in the cell served by the base station.

2. The base station (100) according to Claim 1, wherein the at least one processor (304) is configured to associate a radio bearer used for transmission of the specific signal (150) with a radio bearer used for transmission of the broadcast/multicast signal (160).

3. The base station (100) according to Claim 1 or 2, wherein
the first and second messages relate to a Vehicle-to-Infrastructure, V2I, Service, and
the base station (100) comprises a Road Side Unit, RSU, supporting the V2I Service.

4. The base station (100) according to any one of Claims 1 to 3, wherein the broadcast/multicast signal (160) is transmitted on a broadcast bearer, a multicast bearer, or a Point-to-Multipoint, PTM, bearer.

5. The base station (100) according to any one of Claims 1 to 3, wherein the broadcast/multicast signal (160) is transmitted on a Broadcast Control Channel, BCCH, that carries a System Information Block, SIB.

6. The base station (100) according to any one of Claims 1 to 5, wherein
the specific signal (150) is transmitted on a certain unicast bearer, and
the at least one processor (304) is configured to associate the certain unicast bearer with the broadcast/multicast signal (160).

7. The base station (100) according to Claim 6, wherein
the configuration information comprises bearer configuration information for the unicast bearer, and
the bearer configuration information comprises information indicating that the unicast bearer is a Signaling Radio Bearer, SRB, a Data Radio Bearer, DRB, that is not mapped onto a network bearer, or a DRB to which a corresponding network bearer is terminated at the base station (100).

8. The base station (100) according to Claim 6 or 7, wherein
the configuration information comprises bearer configuration information for the unicast bearer, and
the bearer configuration information comprises one or both of a specific logical channel identifier, LCID, and a specific logical channel group identifier, LCG ID, assigned to the unicast bearer.

9. The base station (100) according to any one of Claims 1 to 5, wherein
the specific signal (150) is transmitted on a broadcast signal, and
the at least one processor (304) is configured to transmit the broadcast/multicast signal (160) in response to reception of the broadcast signal.

10. A method in a base station (100) used in a cellular communication network, the method comprising:
transmitting (201) configuration information regarding a specific signal (150) that is used for a V2X Service, to a first radio terminal (120); and
in response to receiving (203) from the first radio terminal (120) the specific signal (150) containing a first message, transmitting (205) a second message derived from the first message, using a broadcast/multicast signal (160) to be received by a specific radio terminal group identified by an identifier of a V2X service area for vehicle related communications, wherein
the V2X service area is allocated a dedicated carrier frequency bandsecured for said V2X Service and said V2X service area is defined independently from any cell used in the cellular communication network by allowing said V2X service area to at least partially cover a plurality of cells or by having one or more other V2X service areas in the cell served by the base station.

11. The method according to Claim 10, further comprising configuring a radio bearer used for transmission of the specific signal (150) in association with a radio bearer used for transmission of the broadcast/multicast signal (160).

12. A radio terminal (120) comprising:
at least one wireless transceiver (401); and
at least one processor (404) configured to:
receive (201) configuration information regarding a specific signal (150) that is used for a V2X Service, from a base station (100);
in response to occurrence of a certain event (202), transmit (203) the specific signal (150) containing a first message in accordance with the configuration information; and
receive (205), from the base station (100) or another base station, a broadcast/multicast signal (160) to be received by a specific radio terminal group identified by an identifier of a V2X service area for vehicle related communications, the broadcast/multicast signal (160) containing a second message derived from the first message, wherein
the V2X service area is allocated a dedicated carrier frequency band secured for said V2X Service and said V2X service area is defined independently from any cell used in the cellular communication network by allowing said V2X service area to at least partially cover a plurality of cells or by having one or more other V2X service areas in the cell served by the base station.

13. The radio terminal (120) according to Claim 12, wherein the broadcast/multicast signal (160) is transmitted by the base station (100) or the other base station (100) in response to the transmission of the specific signal (150).

14. A method in a radio terminal (120), the method comprising:
receiving (201) configuration information regarding a specific signal (150) that is used for a V2X Service, from a base station (100);
in response to occurrence of a certain event (202), transmitting (203) the specific signal (150) containing a first message in accordance with the configuration information; and
receiving (205), from the base station (100) or another base station, a broadcast/multicast signal (160) to be received by a specific radio terminal group identified by an identifier of a V2X service area for vehicle related communications, the broadcast/multicast signal (160) containing a second message derived from the first message, wherein
the V2X service area is allocated a dedicated carrier frequency band secured for said V2X Service and said V2X service area is defined independently from any cell used in the cellular communication network by allowing said V2X service area to at least partially cover a plurality of cells or by having one or more other V2X service areas in the cell served by the base station.

15. A program product storing a program for causing a computer to perform a method according to Claim 10 or 14.

## Patentansprüche

1. Basisstation (100), die in einem zellularen Kommunikationsnetz verwendet wird, wobei die Basisstation (100) aufweist:
mindestens einen drahtlosen Transceiver(301); und
mindestens einen Prozessor (304), der konfiguriert ist:
Konfigurationsinformation bezüglich eines spezifischen Signals (150), das für einen V2X-Dienst verwendet wird, an ein erstes Funkendgerät (120) zu übertragen (201); und
in Antwort auf den Empfang (203) des spezifischen Signals (150), das eine erste Nachricht enthält, vom ersten Funkendgerät (120) über den mindestens einen drahtlosen Transceiver (301), eine von der ersten Nachricht hergeleitete zweite Nachricht über den mindestens einen drahtlosen Transceiver (301) unter Verwendung eines Broadcast/Multicast-Signals (160) zu übertragen (203), das durch eine spezifische Funkendgerätegruppe empfangen werden soll, die durch eine Identifizierung eines V2X-Dienstbereichs für fahrzeugbezogene Kommunikationen identifiziert ist,
wobei dem V2X-Dienstbereich ein dediziertes Trägerfrequenzband zugewiesen ist, das für den V2X-Dienst gesichert ist, und wobei der V2X-Dienstbereich unabhängig von jeder in dem zellularen Kommunikationsnetz verwendeten Zelle definiert ist, indem dem V2X-Dienstbereich erlaubt wird, zumindest teilweise eine Vielzahl von Zellen abzudecken, oder indem ein oder mehrere andere V2X-Dienstbereiche in der durch die Basisstation bedienten Zelle vorhanden sind.

2. Basisstation (100) nach Anspruch 1, wobei der mindestens eine Prozessor (304) dafür konfiguriert ist, einen für die Übertragung des spezifischen Signals (150) verwendeten Funkträger mit einem für die Übertragung des Broadcast/Multicast-Signals (160) verwendeten Funkträger zu verknüpfen.

3. Basisstation (100) nach Anspruch 1 oder 2, wobei
die erste und die zweite Nachricht mit einem V2I-, Fahrzeug-zu-Infrastruktur, Dienst in Beziehung stehen, und
die Basisstation (100) eine straßenseitige Einheit, RSU, aufweist, die den V2I-Dienst unterstützt.

4. Basisstation (100) nach einem der Ansprüche 1 bis 3, wobei das Broadcast/Multicast-Signal (160) über einen Broadcast-Träger, einen Multicast-Träger oder einen PTM-, Punkt-zu-Multipunkt, Träger übertragen wird.

5. Basisstation (100) nach einem der Ansprüche 1 bis 3, wobei das Broadcast/Multicast-Signal (160) über einen Broadcast-Steuerkanal, BCCH, übertragen wird, der einen Systeminformationsblock, SIB, transportiert.

6. Basisstation (100) nach einem der Ansprüche 1 bis 5, wobei
das spezifische Signal (150) über einen bestimmten Unicast-Träger übertragen wird, und
der mindestens eine Prozessor (304) dafür konfiguriert ist, den bestimmten Unicast-Träger mit dem Broadcast/Multicast-Signal (160) zu verknüpfen.

7. Basisstation (100) nach Anspruch 6, wobei
die Konfigurationsinformation Trägerkonfigurationsinformation für den Unicast-Träger aufweist, und
die Trägerkonfigurationsinformation Information aufweist, die anzeigt, dass der Unicast-Träger ein Signalisierungsfunkträger, SRB, ein Datenfunkträger, DRB, der nicht auf einen Netzwerkträger abgebildet ist, oder ein DRB ist, auf den ein entsprechender Netzwerkträger an der Basisstation (100) terminiert ist.

8. Basisstation (100) nach Anspruch 6 oder 7, wobei
die Konfigurationsinformation Trägerkonfigurationsinformation für den Unicast-Träger aufweist, und
die Trägerkonfigurationsinformation eine spezifische logische Kanalidentifizierung, LCID, und/oder eine spezifische logische Kanalgruppenidentifizierung, LCG ID, aufweist, die dem Unicast-Träger zugewiesen sind.

9. Basisstation (100) nach einem der Ansprüche 1 bis 5, wobei
das spezifische Signal (150) über ein Broadcast-Signal übertragen wird, und
der mindestens eine Prozessor (304) dafür konfiguriert ist, das Broadcast-/Multicastsignal (160) in Antwort auf den Empfang des Broadcast-Signals zu übertragen.

10. Verfahren in einer Basisstation (100), die in einem zellularen Kommunikationsnetz verwendet wird, wobei das Verfahren die Schritte aufweist:
Übertragen (201) von Konfigurationsinformation bezüglich eines spezifischen Signals (150), das für einen V2X-Dienst verwendet wird, an ein erstes Funkendgerät (120); und
in Antwort auf den Empfang (203) des spezifischen Signals (150), das eine erste Nachricht enthält, vom ersten Funkendgerät (120), Übertragen (205) einer zweiten Nachricht, die von der ersten Nachricht hergeleitet ist, unter Verwendung eines Broadcast/Multicast-Signals (160), das durch eine spezifische Funkendgerätegruppe empfangen werden soll, die durch eine Identifizierung eines V2X-Dienstbereichs für fahrzeugbezogene Kommunikationen identifiziert ist, wobei
dem V2X-Dienstbereich ein dediziertes Trägerfrequenzband zugewiesen ist, das für den V2X-Dienst gesichert ist, und wobei der V2X-Dienstbereich unabhängig von jeder Zelle definiert ist, die in dem zellularen Kommunikationsnetz verwendet wird, indem dem V2X-Dienstbereich erlaubt wird, zumindest teilweise eine Vielzahl von Zellen abzudecken, oder indem ein oder mehrere andere V2X-Dienstbereiche in der durch die Basisstation bedienten Zelle vorhanden sind.

11. Verfahren nach Anspruch 10, ferner mit dem Konfigurieren eines Funkträgers, der für eine Übertragung des spezifischen Signals (150) verwendet wird, in Zuordnung zu einem Funkträger, der für die Übertragung des Broadcast/Multicast-Signals (160) verwendet wird.

12. Funkendgerät (120) mit:
mindestens einen drahtlosen Transceiver(401); und
mindestens einem Prozessor (404), der konfiguriert ist:
Konfigurationsinformation bezüglich eines spezifischen Signals (150), das für einen V2X-Dienst verwendet wird, von einer Basisstation (100) zu empfangen (201);
in Antwort auf das Auftreten eines bestimmten Ereignisses (202) das spezifische Signal (150), das eine erste Nachricht enthält, gemäß der Konfigurationsinformation zu übertragen (203); und
von der Basisstation (100) oder von einer anderen Basisstation ein Broadcast/Multicast-Signal (160) zu empfangen, das durch eine spezifische Funkendgerätegruppe empfangen werden soll, die durch eine Identifizierung eines V2X-Dienstbereichs für fahrzeugbezogene Kommunikationen identifiziert ist, wobei das Broadcast/Multicast-Signal (160) eine zweite Nachricht enthält, die von der ersten Nachricht hergeleitet ist,
wobei dem V2X-Dienstbereich ein dediziertes Trägerfrequenzband zugewiesen ist, das für den V2X-Dienst gesichert ist, und wobei der V2X-Dienstbereich unabhängig von jeder Zelle definiert ist, die in dem zellularen Kommunikationsnetz verwendet wird, indem dem V2X-Dienstbereich erlaubt wird, zumindest teilweise eine Vielzahl von Zellen abzudecken, oder indem ein oder mehrere andere V2X-Dienstbereiche in der durch die Basisstation bedienten Zelle vorhanden sind.

13. Funkendgerät (120) nach Anspruch 12, wobei das Broadcast/Multicast-Signal (160) durch die Basisstation (100) oder die andere Basisstation (100) in Antwort auf die Übertragung des spezifischen Signals (150) übertragen wird.

14. Verfahren in einem Funkendgerät (120), wobei das Verfahren die Schritte aufweist:
Empfangen (201) von Konfigurationsinformation bezüglich eines spezifischen Signals (150), das für einen V2X-Dienst verwendet wird, von einer Basisstation (100);
Übertragen (203) des spezifischen Signals (150), das eine erste Nachricht enthält, in Antwort auf das Auftreten eines bestimmten Ereignisses (202) gemäß der Konfigurationsinformation; und
Empfangen (205) eines Broadcast/Multicast-Signals (160), das durch eine spezifische Funkendgerätegruppe empfangen werden soll, die durch eine Identifizierung eines V2X-Dienstbereichs für fahrzeugbezogene Kommunikation identifiziert ist, von der Basisstation (100) oder einer anderen Basisstation, wobei das Broadcast/Multicast-Signal (160) eine zweite Nachricht enthält, die von der ersten Nachricht hergeleitet ist,
wobei dem V2X-Dienstbereich ein dediziertes Trägerfrequenzband zugewiesen ist, das für den V2X-Dienst gesichert ist, und wobei der V2X-Dienstbereich unabhängig von jeder Zelle definiert ist, die in dem zellularen Kommunikationsnetz verwendet wird, indem dem V2X-Dienstbereich erlaubt wird, zumindest teilweise eine Vielzahl von Zellen abzudecken, oder indem ein oder mehrere andere V2X-Dienstbereiche in der durch die Basisstation bedienten Zelle vorhanden sind.

15. Programmprodukt, das ein Programm speichert, das einen Computer veranlasst, ein Verfahren nach Anspruch 10 oder 14 auszuführen.

## Revendications

1. Station de base (100) utilisée dans un réseau de communication cellulaire, la station de base (100) comprenant :
au moins un émetteur-récepteursans fil (301) ; et
au moins un processeur (304) configuré pour:
transmettre (201) des informations de configuration concernant un signal spécifique (150) qui est utilisé pour un service V2X, à un premierterminal radio (120) ; et
en réponse à la réception (203) depuis le premier terminal radio (120), via l'au moins un émetteur-récepteursans fil (301), du signal spécifique (150) contenant un premier message, transmettre (203) un deuxième message dérivé du premier message, via l'au moins un émetteur-récepteursans fil (301) à l'aide d'un signal de radiodiffusion/multidiffusion (160) à recevoir par un groupe de terminaux radio spécifique identifié par un identifiant d'une zone de service V2X pour des communications liées à un véhicule, dans laquelle
la zone de service V2X se voit allouer une bande de fréquence porteuse dédiée sécurisée pour ledit service V2X et ladite zone de service V2X est définie indépendamment de toute cellule utilisée dans le réseau de communication cellulaire par le fait de permettre à ladite zone de service V2X de couvrir au moins partiellement une pluralité de cellules ou d'avoir une ou plusieurs autres zones de service V2X dans la cellule desservie par la station de base.

2. Station de base (100) selon la revendication 1, dans laquelle l'au moins un processeur (304) est configuré pour associer un support radio utilisé pour la transmission du signal spécifique (150) à un support radio utilisé pour la transmission du signal de radiodiffusion/multidiffusion (160).

3. Station de base (100) selon la revendication 1 ou 2, dans laquelle
les premier et deuxième messages sont liés à un service véhicule-à-infrastructure, V2I, et
la station de base (100) comprend une unité de bord de route, RSU, prenant en charge le service V2I.

4. Station de base (100) selon l'une quelconque des revendications 1 à 3, dans laquelle le signal de radiodiffusion/multidiffusion (160) esttransmis sur un support de radiodiffusion, un support de multidiffusion, ou un support point-à-multipoint, PTM.

5. Station de base (100) selon l'une quelconque des revendications 1 à 3, dans laquelle le signal de radiodiffusion/multidiffusion (160) esttransmis sur un canal de commande de radiodiffusion, BCCH, qui achemine un bloc d'informations système, SIB.

6. Station de base (100) selon l'une quelconque des revendications 1 à 5, dans laquelle
le signal spécifique (150) est transmis sur un certain support de monodiffusion, et
l'au moins un processeur (304) est configuré pour associer le certain support de monodiffusion au signal de radiodiffusion/multidiffusion (160).

7. Station de base (100) selon la revendication 6, dans laquelle
les informations de configuration comprennent des informations de configuration de support pour le support de monodiffusion, et
les informations de configuration de support comprennentdes informations indiquant que le support de monodiffusion est un support radio de signalisation, SRB, un support radio de données, DRB, qui n'est pas mappé sur un support de réseau, ou un DRB sur lequel un support de réseau correspondant se termine au niveau de la station de base (100).

8. Station de base (100) selon la revendication 6 ou 7, dans laquelle
les informations de configuration comprennent des informations de configuration de support pour le support de monodiffusion, et
les informations de configuration de support comprennent l'un ou les deux d'un identifiant de canal logique, LCID, spécifique et d'un identifiant de groupe de canaux logiques, LCG ID, spécifique attribués au support de monodiffusion.

9. Station de base (100) selon l'une quelconque des revendications 1 à 5, dans laquelle
le signal spécifique (150) est transmis sur un signal de radiodiffusion, et
l'au moins un processeur (304) est configuré pour transmettre le signal de radiodiffusion/multidiffusion (160) en réponse à la réception du signal de radiodiffusion.

10. Procédé dans une station de base (100) utilisée dans un réseau de communication cellulaire, le procédé comprenant :
la transmission (201) d'informations de configuration concernant un signal spécifique (150) qui est utilisé pour un service V2X, à un premier terminal radio (120) ; et
en réponse à la réception (203) depuis le premier terminal radio (120) du signal spécifique (150) contenant un premier message, la transmission (205) d'un deuxième message dérivé du premier message, à l'aide d'un signal de radiodiffusion/multidiffusion (160) à recevoir par un groupe de terminaux radio spécifique identifié par un identifiant d'une zone de service V2X pour des communications liées à un véhicule, dans lequel
la zone de service V2X se voit allouer une bande de fréquence porteuse dédiée sécurisée pour ledit service V2X et ladite zone de service V2X est définie indépendamment de toute cellule utilisée dans le réseau de communication cellulaire par le fait de permettre à ladite zone de service V2X de couvrir au moins partiellement une pluralité de cellules ou d'avoir une ou plusieurs autres zones de service V2X dans la cellule desservie par la station de base.

11. Procédé selon la revendication 10, comprenant en outre la configuration d'un support radio utilisé pour la transmission du signal spécifique (150) en association avec un support radio utilisé pour la transmission du signal de radiodiffusion/multidiffusion (160).

12. Terminal radio (120) comprenant :
au moins un émetteur-récepteursans fil (401) ; et
au moins un processeur (404) configuré pour:
recevoir (201) des informations de configuration concernant un signal spécifique (150) qui est utilisé pour un service V2X, depuis une station de base (100) ;
en réponse à la survenue d'un certain événement (202), transmettre (203) le signal spécifique (150) contenant un premier message en conformité avec les informations de configuration ; et
recevoir (205), depuis la station de base (100) ou une autre station de base, un signal de radiodiffusion/multidiffusion (160) à recevoir par un groupe de terminaux radio spécifique identifié par un identifiant d'une zone de service V2X pour des communications liées à un véhicule, le signal de radiodiffusion/multidiffusion (160) contenant un deuxième message dérivé du premier message, dans lequel
la zone de service V2X se voit allouer une bande de fréquence porteuse dédiée sécurisée pour ledit service V2X et ladite zone de service V2X est définie indépendamment de toute cellule utilisée dans le réseau de communication cellulaire par le fait de permettre à ladite zone de service V2X de couvrir au moins partiellement une pluralité de cellules ou d'avoir une ou plusieurs autres zones de service V2X dans la cellule desservie parla station de base.

13. Terminal radio (120) selon la revendication 12, dans lequel le signal de radiodiffusion/multidiffusion (160) est transmis par la station de base (100) ou l'autre station de base (100) en réponse à la transmission du signal spécifique (150).

14. Procédé dans un terminal radio (120), le procédé comprenant :
la réception (201) d'informations de configuration concernant un signal spécifique (150) qui est utilisé pour un service V2X, depuis une station de base (100) ;
en réponse à la survenue d'un certain événement(202), la transmission (203) du signal spécifique (150) contenant un premier message en conformité avec les informations de configuration ; et
la réception (205), depuis la station de base (100) ou une autre station de base, d'un signal de radiodiffusion/multidiffusion (160) à recevoir par un groupe de terminaux radio spécifique identifié par un identifiant d'une zone de service V2X pour des communications liées à un véhicule, le signal de radiodiffusion/multidiffusion (160) contenant un deuxième message dérivé du premier message, dans lequel
la zone de service V2X se voit allouer une bande de fréquence porteuse dédiée sécurisée pour ledit service V2X et ladite zone de service V2X est définie indépendamment de toute cellule utilisée dans le réseau de communication cellulaire par le fait de permettre à ladite zone de service V2X de couvrir au moins partiellement une pluralité de cellules ou d'avoir une ou plusieurs autres zones de service V2X dans la cellule desservie par la station de base.

15. Produit-programme stockant un programme pour amenerun ordinateur à réaliser un procédé selon la revendication 10 ou 14.
